Europäisches Patentamt

European Patent Office

Office européen des brevets

(11) Publication number : **0 599 570 A1**

# (12) EUROPEAN PATENT APPLICATION

(21) Application number : 93309265.2

(22) Date of filing : 22.11.93

(51) Int. Cl.⁵ : **H04N 5/243**, H04N 5/235, H04N 3/15

(30) Priority : 24.11.92 JP 313664/92

(43) Date of publication of application :
01.06.94 Bulletin 94/22

(84) Designated Contracting States :
DE FR GB

(71) Applicant : KABUSHIKI KAISHA TOSHIBA
72, Horikawa-cho
Saiwai-ku
Kawasaki-shi Kanagawa-ken 210 (JP)

(72) Inventor : Kotaki, Hiroaki, c/o Intellectual
Property Divis.
Toshiba Corp,
1-1-1, Shibaura, Minato-ku
Tokyo (JP)

(74) Representative : O'Connell, David Christopher
et al
HASELTINE LAKE & CO.
Hazlitt House
28 Southampton Buildings
Chancery Lane
London WC2A 1AT (GB)

(54) Solid-state imaging apparatus with expanded dynamic range.

(57) A solid-state imaging element (2) output a first ($V_s'$) and a second ($V_r'$) video signals. A comparator (12) compare the second video signal ($V_r'$) with a predetermined level, and is detected a condition of saturation of the first video signal ($V_s'$). When the first video signal ($V_s'$) is less than a saturation output level of the solid-state imaging element (2), a gain of a gain control section (14) is set up 1. When the first video signal ($V_s'$) is equal to a saturation output level of the solid-state imaging element (2), a coefficient unit (11) divide the second video signal ($V_r'$) with the predetermined level. This result of division controls the gain of the gain control section (14).

FIG. 2

EP 0 599 570 A1

The present invention relates to solid-state imaging apparatus using an imaging device such as a charge coupled imaging device, and more particularly to a solid-state imaging apparatus for expanding the dynamic range of a solid-state imaging element in the solid-state imaging apparatus.

Generally, a standard output level of a television camera is set at about 1/6 of a saturation output level of an imaging element of the television camera due to a trade-off between optical sensitivity and signal-to-noise ( SN ) ratio of video signals. In other words, the television camera is set to output the video signal at 100 % of the normal level when an output level of the imaging element is 1/6 of the saturation output level of the imaging element, the output level of the video signal of the television camera being set at 100 % of the standard output level of the television camera. Accordingly, the television camera can normally process the video signals to reproduce them on a monitor up to 6 times ( +16dB ) the light-intensity of a subject at an output level that is 100 % of the standard level. Therefore, for example, provided that the television camera is set up at a level of 100 % of the standard output level of the television camera when the optical image level of the subject is 2,000 lx and the f-number of the iris of an optical system of the television camera is 8, the optical image level A will be:

$$A = 6 \times 2,000 \times 8 = 96,000 \, lx \quad (1)$$

Accordingly, the imaging element of the television camera does not saturate before the optical image level reaches 96,000 lx.

Nevertheless, a subject can be exposed to direct rays of the sun and partly in shadow, with the result that the actual optical image level of the subject can vary between about 100,000 lx and 10 lx. Thus, in the case of a wide dynamic range of the optical image level of the subject, the television camera can not always stop down the lens or maximize the f-number of the optical system of the television camera, generally. Accordingly, a highly illuminated portion of the subject is saturated, which sometimes causes a white compression. Particularly, there is a requirement that when used outdoors, in cars or satellites, the cameras have a wider dynamic range in a range higher than the standard dynamic range.

A method of expanding the dynamic range of the television camera can be accomplished by conventional design technologies.

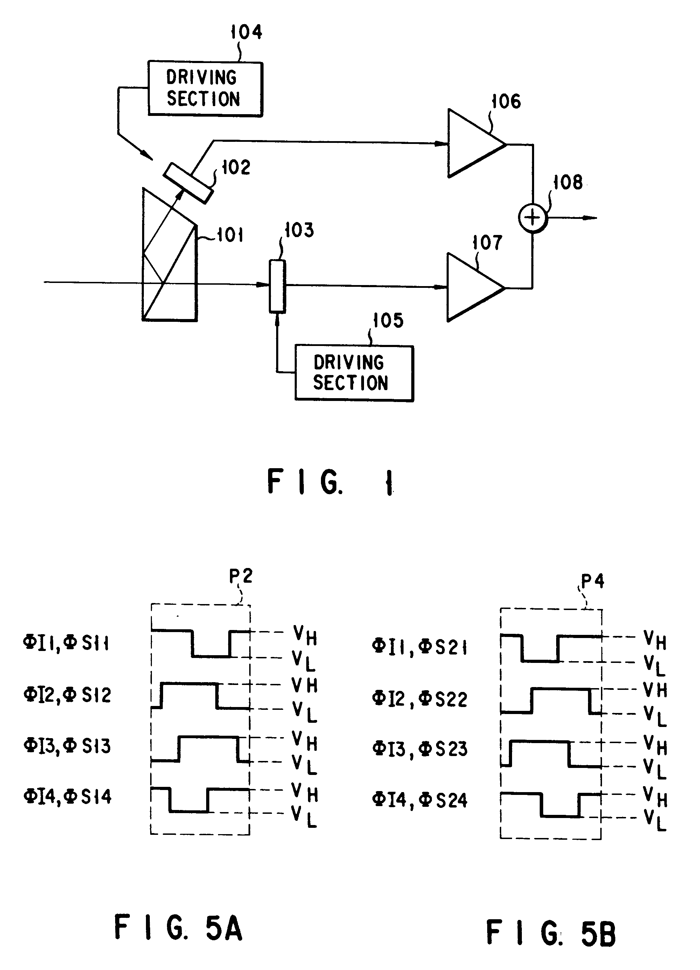

Figure 1 shows a general construction of a solid-state imaging apparatus having an expanded dynamic range of a solid-state imaging element in the solid-state imaging apparatus. In Figure 1, numeral 101 denotes a separation prism. An optical image of a subject passing through a camera lens is divided by the separation prism 101 into two optical images which are then focused on solid-state imaging elements 102 and 103, respectively, so as to be converted into electric signals. Then, for example, to obtain desirable optical sensitivities in the solid-state imaging elements 102 and 103, respectively, the solid-state imaging elements 102 and 103 are separately controlled by different charge storage driving pulses generated at driving sections 104 and 105, respectively.

The signals supplied from the solid-state imaging elements 102, 103 are amplified to specified levels by amplifier sections 106 and 107, respectively, and then the signals are combined at an adder section 108. In this way, a signal of wider dynamic range is obtained. However, the conventional solid-state imaging apparatus needs an arrangement like the light separation prism for separating light into two directions, at least two solid-state imaging elements, and the driving sections. Consequently this solid-state imaging apparatus encounters the problem that it can not be miniaturized.

As described above, when a conventional solid-state imaging apparatus, for example, a monitor camera, is used outdoors or in cars or satellites with a wider dynamic range of optical image level, then according to circumstances, the conventional solid-state imaging apparatus experiences saturation of charge storage of an optical image. Therefore, there is a requirement that such cameras have a wider dynamic range in a range higher than the standard dynamic range.

## Summary of the Invention

An object of the present invention is to provide a solid-state imaging apparatus having a wider dynamic range of output signals which has only one solid-state imaging element, but without the need for means for separating light.

According to a first aspect of the present invention, the solid-state imaging apparatus including a plurality of pixes elements is provided with imaging means for converting an optical image into first and second video signals which have different optical sensitivities; comparison means for comparing a level of the first video signal, for each of predetermined pixel elements, with a predetermined level; calculate means for calculating a coefficient from the first video signal level and the predetermined level when the first video signal level of the predetermined pixel element is higher than the predetermined level; and control means for controlling the second video signal in accordance with the coefficient.

## Brief Description of the Drawings

Figure 1 is a block diagram showing a typical arrangement of a solid-state imaging apparatus having a wider dynamic range of a solid-state imaging element;

Figure 2 is a block diagram showing an embodiment of a solid-state imaging apparatus according to the present invention;

Figure 3 is a diagram showing an arrangement of a solid-state imaging element 2 shown in Figure 2;

Figure 4 is a timing chart for explaining an operation of the solid-state imaging element shown in Figure 3;

Figures 5(A) and 5(B) are diagrams illustrating details of the timing chart shown in Figure 4;

Figure 6 is a another diagram illustrating details of the timing chart shown in Figure 4; and

Figure 7 is a timing chart for illustrating the coefficient unit 11, the comparator 12, the gain control section 14, and selector 15 shown in Figure 2.

## Detailed Description of the preferred Embodiments

An embodiment of the present invention will be explained in detail, referring to the accompanying drawings.

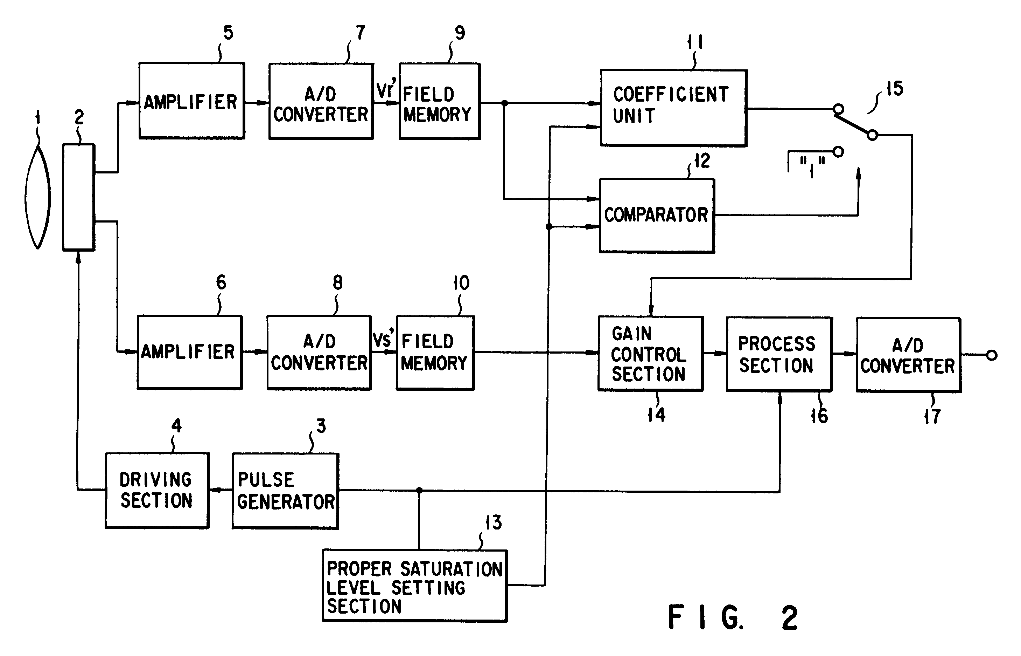

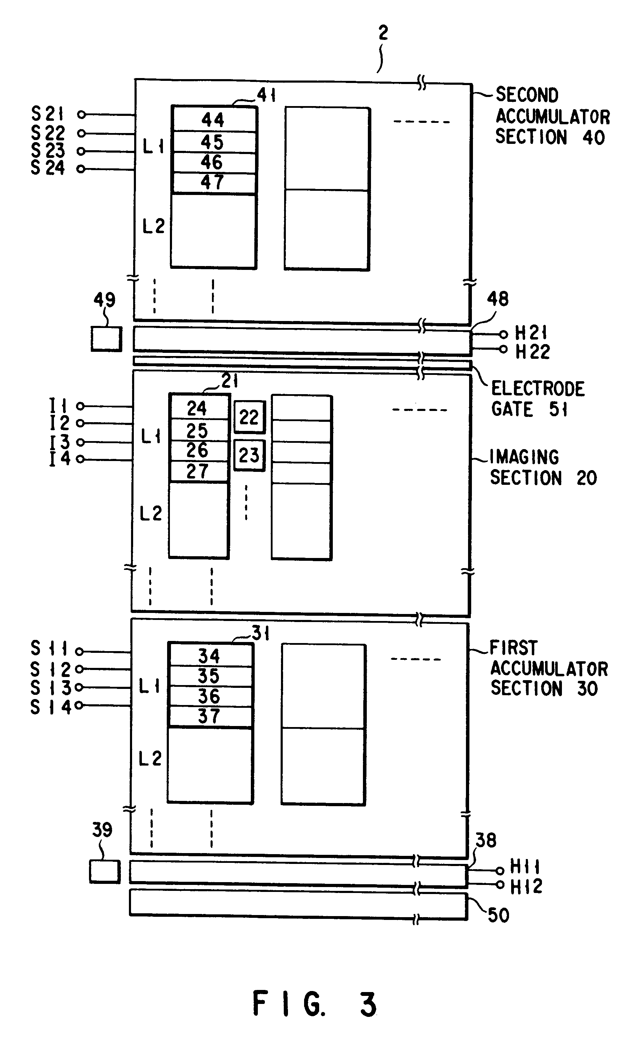

In Fig. 2, numeral 1 denotes a camera lens. An optical image of a subject passing through the camera lens 1 is focused on the light-sensitive surface of a solid-state imaging element 2. For example, the solid-state imaging element 2 has an arrangement as shown in Fig. 3.

In Fig. 3, numeral 20 denotes an imaging section. The imaging section 20 has photoelectric converting elements 22 and 23, and a first vertical transfer register 21. The photoelectric converting elements 22 and 23 yield an amount of charge corresponding to the light incident thereon. The first vertical transfer register 21 transfers charge in the vertical direction to an image scanning direction.

Numeral 30 denotes a first accumulator section for accumulating a charge. The first accumulator section 30 has a second vertical transfer register 31. The second vertical transfer register 31 transfers the charge from the first vertical transfer register 21, in the imaging section 20, in the vertical scanning direction. Similarly, numeral 40 denotes a second accumulator section for accumulating a charge. The second accumulator section 40 is set up on the opposite side of the imaging section 20 with respect to the first accumulator section 30. The second accumulator section 40 has a third vertical transfer register 41 for transferring in the vertical direction a charge from the first vertical transfer register 21 in the imaging section 20. Register 41 can shift bi directionally in a vertical direction.

Numeral 38 denotes a first horizontal transfer register. The first horizontal transfer register 38 transfers the charge from the second vertical transfer register 31 in the first accumulator section 30 during each charge transfer period. Similarly, numeral 48 denotes a second horizontal transfer register. The second horizontal transfer register 48 transfers the charge from the third vertical transfer register 41 in the second accumulator section 40 during each charge transfer period. During the second horizontal transfer register 48 transferring operation, the charge on an electrode gate 51 is placed in a closed state, so that a charge of the second horizontal transfer register 48 is prevented from returning to the imaging section 20. Furthermore, when the second horizontal transfer register 48 supplies a predetermined voltage to the electrode gate 51, a charge transferred from the first vertical transfer register 21 is transferred in the horizontal direction of the second horizontal transfer register 48, or is transferred to the third vertical transfer register 41 in the second accumulator section 40.

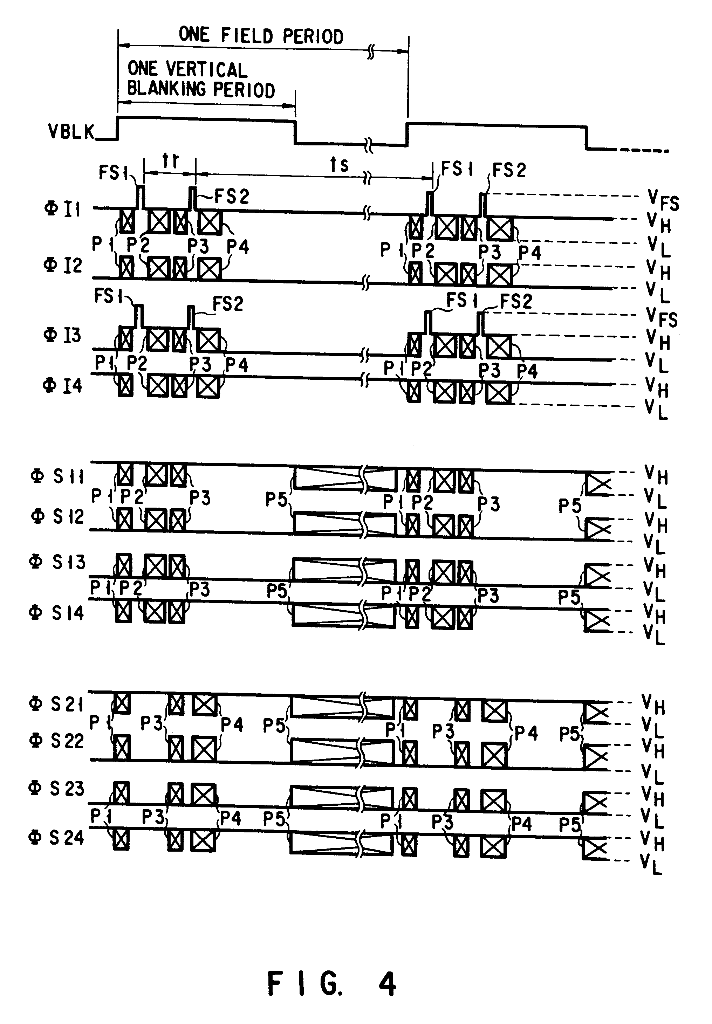

The imaging section 20 has an array of photoelectric converting elements with about 500 pixels per column ( L1, L2, '", L500 ) × about 800 pixels per row. Every first vertical transfer register 21 has the photoelectric converting elements 22 and 23, for implementing an interlaced scanning of television signals. Furthermore, every first vertical transfer register 21 has four electrode areas 24, 25, 26 and 27. The electrode areas 24, 25, 26 and 27 are connected to terminals I1, I2, I3 and I4, respectively, as shown in Fig. 3. Referring also to Fig. 2, a pulse from a pulse generator 3 is supplied to a driving section 4. The driving section 4 supplies four vertical transfer pulse trains $\Phi I1$, $\Phi I2$, $\Phi I3$ and $\Phi I4$, which are respectively different in phase, to the terminals I1, I2, I3 and I4, respectively. In this case, the electrode areas 24 and 26 are supplied with a pulse of VFS level ( which will be called hereinafter the "field shift pulse" ) as shown in Fig. 4, for example. As a result, charge is transferred to the first vertical transfer register 21 from the photoelectric converting elements 22 and 23.

On the other hand, the whole surface of the first accumulator section 30 is masked from light. Similar to the first vertical transfer register 21 in the imaging section 20, the second vertical transfer register 31 is divided inta four electrode areas 34, 35, 36 and 37. The electrode areas 34, 35, 36 and 37 are connected to terminals S11, S12, S13 and S14, respectively. The terminals S11, S12, S13 and S14 are supplied with four vertical transfer pulse trains $\Phi S11$, $\Phi S12$, $\Phi S13$ and $\Phi S14$, which are respectively different in phase, from the driving section 4, as shown in Fig. 2.

Similarly, the whole surface of the second accumulator section 40 is shielded from light. The third vertical transfer register 41 is composed of electrode areas 44, 45, 46 and 47. Each of the electrode areas 44, 45, 46 and 47 is connected to a respective one of the terminals S21, S22, S23 and S24. The terminals S21, S22, S23 and S24 are each supplied with vertical transfer pulse trains $\Phi S21$, $\Phi S22$, $\Phi S23$ and $\Phi S24$ of four different phases from the driving section 4, respectively, as shown in Fig. 2. The vertical transfer pulse trains $\Phi I1$ through $\Phi I4$, $\Phi S11$ through $\Phi S14$ and $\Phi S21$ through $\Phi S24$ get either VH and VL levels except for the field shift pulse ( FS1 or FS2 ), as shown in Fig. 4. When they have the VH level, a potential well is made under the electrode areas 44, 45, 46 and 47.

The first horizontal transfer register 38 has two terminals H11 and H12. The terminals H11 and H12 aresupplied with two horizontal transfer pulse trains ΦH11 and ΦH12 which are different in phase from each other. Similarly, the second horizontal transfer register 48 has two terminals H21 and H22. Each of the terminals H21 and H22 is supplied with a respective horizontal transfer pulse train ΦH21 or ΦH22, which are of different phases, from the driving section 4.

In Fig. 3, numerals 39 and 49 denote output sections, respectively. These output sections 39 and 49 convert the charges from the first and the second horizontal transfer registers 38 and 48 into voltage signals for outputting them to respective signal-processing sections ( not shown ).

Numeral 50 denotes a drain section. When the drain section 50 is supplied with a proper voltage signal, the charges transferred from the second vertical transfer register 31 in the first accumulator section 30 through the first horizontal transfer register 38 are drained out therefrom.

Fig. 4 illustrates the vertical transfer pulse trains ΦI1 through ΦI4, ΦS11 through ΦS14 and ΦS21 through ΦS24 supplied to the terminals I1 through I4, S11 through S14 and S21 through S24 in Fig. 3. Each vertical transfer pulse train includes high-speed transfer pulses P2 and P4, respectively, as shown in Fig. 4, for effecting a fast transfer of the charges to the second and third vertical transfer register 31,41. The high-speed transfer pulses P2 and P4 have frequencies of 1.5 MHz. Furthermore, each vertical transfer pulse train has drain pulses P1 and P3, respectively. The drain pulses P1 and P3 drain out residual charges such as smear components in the first, second and third vertical transfer registers 21, 31 and 41, to the drain section 50. Each of the vertical transfer pulse trains ΦI1 and ΦI3 has field shift pulses FS1 and FS2. A pulse period of the field shift pulses FS1 is equal to the field scanning period, as shown in Fig. 4. Also, a pulse period of the field shift pulse FS2 is the field scanning period. Each of the pulses P1, P2, P3 and P4 and the field shift pulses FS1 and FS2 occur in a vertical blanking period. Each of the vertical transfer pulse trains ΦS11 through ΦS14 and ΦS21 through ΦS24 has a pulse P5 corresponding to the horizontal blanking period which will be described later. The charges on the second and third vertical transfer registers 31 and 41 in the first and second accumulator sections 30 and 40 are transferred in the vertical direction each transfer period, respectively.

Except for these pulses, a vertical blanking pulse VBLK is shown in Fig. 4. A vertical blanking period is about 1.3 ms in the NTSC standard television format system.

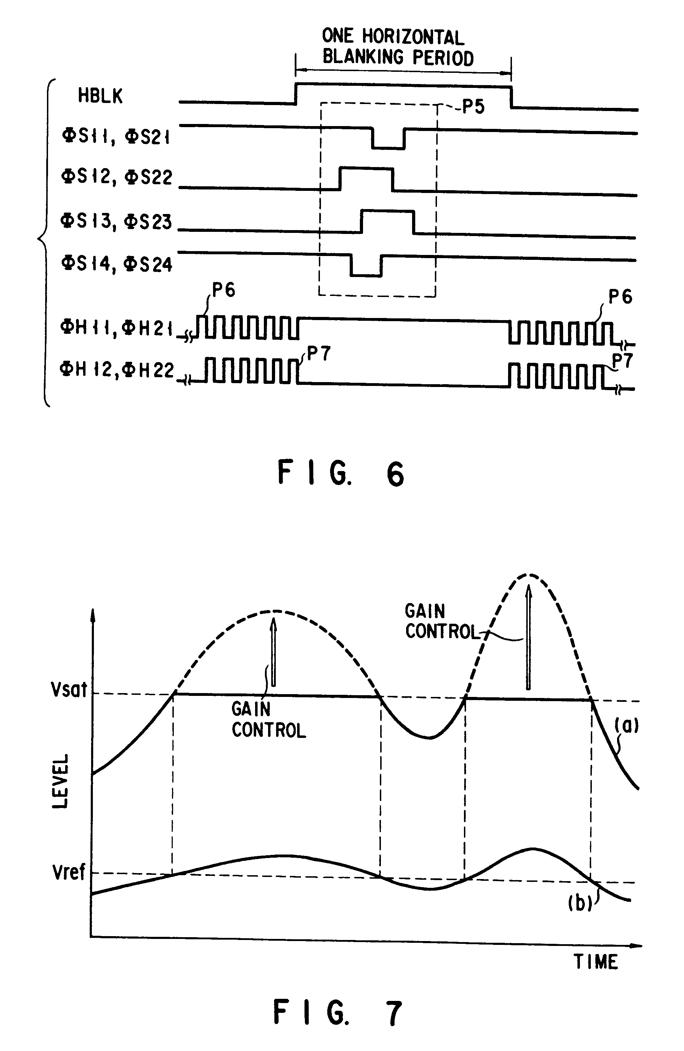

Figs. 5 (A) and 5 (B) show the details of the period of the high-speed transfer pulses P2 and P4 in Fig. 4, respectively. When the high-speed transfer pulses P2 are supplied to the first and second vertical transfer registers 21 and 31, the charges are transferred to the first accumulator section 30 from the imaging section 20. Similarly, when the high-speed transfer pulses P4 are supplied to the first and third vertical transfer registers 21 and 41, the charge is transferred to the second accumulator section 40 from the imaging section 20.

Fig. 6 shows the detail of the horizontal transfer pulse trains ΦH11 and ΦH12 ( or ΦH21 and ΦH22 ) and the pulses P5, as shown in Fig. 4, in the vertical transfer pulse trains ΦS11 through ΦS14 ( or ΦS21 through ΦS24 ) supplied to the terminals H11, H12, H21 and H22. As shown in Fig. 6, the vertical transfer pulse trains ΦS11 and ΦS12 ( or ΦS21 and ΦS22 ) have transfer pulses P6 and P7 opposite in phase with each other. In Figure 6, when the photoelectric converting elements have about 800 pixels per row, the transfer pulses P6 and P7 have the frequency of 14.3 MHz. Furthermore, the pulse P5 is generated during every horizontal blanking period. The second and third vertical transfer registers 31 and 41 transfer the charges to the first and second horizontal transfer registers 38 and 48 by the pulses P5, respectively. Furthermore, the vertical blanking period is 10.9 μs in the NTSC system.

Referring now to the Figures 3 through 7, an operation of the embodiment will be explained in detail.

First, in response to the drain pulses P1 in the vertical transfer pulse trains ΦI1 through ΦI4, ΦS11 through ΦS14 and ΦS21 through ΦS24, the first, second and third vertical transfer registers 21, 31 and 41 drain out therefrom the residual charges, such as smear components, to the drain section 50.

Then, the field shift pulses FS1 in the vertical transfer pulse trains ΦI1 and ΦI3 are supplied to the terminals I1 and I3, respectively. Simultaneously, the charges accumulated in the photoelectric converting elements 22 and 23 in the imaging section 20 during a charge accumulation period ts are transferred to the first vertical transfer register 21.

The charges accumulated in vertically adjacent pixels are combined with each other. Such pixels comprise the photoelectric converting elements 22 and 23. Next, the charges of every two vertically adjacent pixels, e.g., L1 and L2, L3 and L4, L5 and L6, as shown in Fig. 3, are combined with each other, respectively.

Thereafter, the high-speed transfer pulses P2 in the vertical transfer pulse trains ΦI1 through ΦI4, ΦS11 through ΦS14 and ΦS21 through ΦS24 are output to the first, second and third vertical transfer registers 21, 31 and 41, respectively. Fig. 5 (A) shows a timing chart illustrating a period of the high-speed transfer pulse P2. A first signal ( in charge accumulation period ts ) of an odd-numbered field in the interest of interlace scanning of television is transferred from the imaging section 20 to the first accumulator section 30.

Next, in response to the drain pulses P3 in the vertical transfer pulse trains ΦI1 through ΦI4, ΦS11 through ΦS14 and ΦS21 through ΦS24, the first, second and third vertical transfer registers 21, 31 and 41 drain out therefrom the residual charges, such as smear components, to the drain section 50.

Then, the field shift pulses FS2 in the vertical transfer pulse trains ΦI1 and ΦI3 are supplied to the terminals I1 and I3, respectively. Simultaneously, the charges accumulated in the photoelectric converting elements 22 and 23 in the imaging section 20 during a charge accumulation period tr are transferred to the first vertical transfer register 21. Next, the charges of every two vertically adjacent pixels, e.g., L1 and L2, L3 and L4, L5 and L6, as shown in Fig. 3, are combined with each other, respectively. Thereafter, the high-speed transfer pulses P4 in the vertical transfer pulse trains ΦI1 through ΦI4, ΦS11 through ΦS14 and ΦS21 through ΦS24 are output to the first, second and third vertical transfer registers 21, 31 and 41. Fig. 5 (B) shows a timing chart illustrating a period of the high-speed transfer pulse trains P4. Then, a second signal ( in charge accumulation period tr ) of odd-numbered field in the interest of interlace scanning of television is transferred from the imaging section 20 to the second accumulator section 40. At this transferring time, the electrode gate 51 is opened, and the second horizontal transfer register 48 does not transfer the charge in horizontal direction. As explained below, the signal from the electrode gate 51 is used as a control signal.

Thus, the charge from the imaging section 20 is transferred to the first accumulator section 30. The second vertical transfer register 31 is driven by the pulses P5 in the vertical transfer pulse trains ΦS11, ΦS12, ΦS13 and ΦS14 ( Fig.4 and Fig.5 ), so that the charge is transferred to the first horizontal transfer register 38, one line at a time.

Similarly, the charge from the imaging section 20 is transferred to the second accumulator section 40, and then to the second horizontal transfer register 48, one line at a time. The first horizontal transfer register 38 transfers the charge to the output sections 39 in the horizontal direction by the pulses P6 and P7 in the horizontal transfer pulse trains ΦH11 and ΦH12, which are opposite in phase with each other, as shown in Fig. 6. Then the output section 39 outputs a voltage signal corresponding to the charge. Similarly, the second horizontal transfer register 48 transfers the charge to the output sections 49 in the horizontal direction. Then the output section 49 outputs a voltage signal corresponding to the charge.

In the above explanation, the signals in the first and second accumulator sections 30 and 40 are odd-numbered fields in the interest of interlace scanning of television. In even-numbered fields to be paired with the odd-numbered fields for interlace scanning of television, after the field shift pulses FS1 and FS2 are supplied to the terminals I1 and I3, the charges of every two vertically adjacent pixels are combined with each other in different manners. That is, the charges of every two vertically adjacent pixels, e.g., L2 and L3, L4 and L5, L6 and L7, as shown in Fig. 3, are combined with each other, respectively. Thereafter, the transfer operation of the charge is carried out in completely similar to that of the above case.

Thus, two kind of video signals having different optical sensitivities are output from the solid-state imaging element 2, as shown in Fig. 2. An amplifier 5 of Fig. 2 amplifies a signal Vr output from the output sections 49 in Fig. 3 to a predetermined level and supplies the signal Vr to an A/D converter 7. The A/D converter 7 converts the signal Vr from the amplifier 5 into a digital signal Vr', and then supplies the digital signal Vr' to a field ( or frame ) memory 9.

Similarly, An amplifier 6 in Fig. 2 amplifies a signal Vs output from the output section 39 in Fig. 3 to a predetermined level and supplies the signal Vs to an A/D converter 8. The A/D converter 8 converts the signal Vs from the amplifier 6 into a digital signal Vs' and then supplies the digital signal Vs' to a field ( or frame ) memory 10.

The digital signal Vr' stored in the field memory 9 is supplied to one input of a coefficient unit 11, and also to one input of a comparator 12. Another input of the coefficient unit 11 and another input of the comparator 12 are supplied with a reference with a proper saturation level signal from a proper saturation level setting section 13.

The operation of the proper saturation level setting section 13 will be now explained in detail. Providing the saturation output level of the solid-state imaging element 2 and the reference level to be compared thereto as Vsat and Vref, the reference level Vref is defined by following equation (2).

$$Vref = Vsat \times tr / ts \quad (2)$$

Fig. 7 shows the output of one scanning line from the solid-state imaging element 2. In Fig. 7, curve (a) is the output of the output sections 39, while curve (b) is the output of the output sections 49. The ratio of the charge accumulation periods ts and tr is set in advance so that, even if the charge of the imaging section 20 reaches the the saturation level by the charge accumulation period ts, the charge of the imaging section 20 is prevented from reaching the saturation level by the charge accumulation period tr. Therefore, Vref of equation (2) is set at the output level of the solid-state imaging element 2 by the charge accumulation period ts under the luminance intensity in that the output of the solid-state imaging element 2 reaches Vsat during the charge accumulation period tr. The coefficient unit 11 divides the signal Vr by the reference level Vref ( i.e., calculate "Vr/Vref" ), then the subtraction result of the operation is supplied to one input of a selector 15. A fixed value of 1 is supplied to another input of the selector 15.

The control operation of the selector 15 will be now explained in detail. The comparator 12 compares the signal Vr with the reference level Vref, and supplies a control signal to the selector 15. Inresponse to the control signal from the comparator 12, the selector 15 selects the signal from the coefficient unit 11 or the fixed value " 1 " and then supplies the selected signal to a gain control section 14. In the comparator 12, when the signal Vr is higher than the reference level Vref, the selector 15 selects the signal Vr/Vref from the coefficient unit 11. While when the signal Vr is equal to or less than the reference level Vref, the selector 15 selects the fixed value " 1 ". Under the gain control by the signal supplied from the selector 15, the gain control section 14 controls the signal from the output sections 39 in Fig. 3 in every pixel of accumulation period ts.

Generally, solid-state imaging elements have a prescribed photoelectric transducing characteristics such that the output level of the solid-state imaging element is in proportion to a level of an optical image up to the saturation output level. And when the level of the optical image is higher than the saturation output level, the output level of the solid-state imaging element is clipped to the saturation output level. Therefore, when an output level of every pixel from the output section 49 is lower than or equal to the reference level Vref, the gain control section 14 supplys the signal from the field memory 10 to a process section 16. And when the output level of every pixel from the output section 49 is higher than the reference level Vref, the gain control section 14 multiplies the input signal by Vr/Vref, and supplies the multiplied output to the process section 16.

Accordingly, if the output signal from the output section 39 is clipped to the saturation output level, the gain control section 14 performs a calculation to provide a signal as though the output signal from the output section 39 has not been saturated, by the level of every pixel from the output section 49 and the reference level Vref, as shown in Fig. 7. Thus, the dynamic range of the solid-state imaging element is expanded. That is, if the signal at a saturation level is supplied to the gain control section 14, the gain control section 14 controls the gain of every pixel in accordance with Vr/Vref. Thus, the output of the gain control section 14 is directly proportional to Vr.

The video signal thus having the expanded dynamic range is supplied to a process section 16, and then undergoes a nonlinear processing such as a gamma correction, and also added with a synchronizing signal if necessary. The video signal is then supplied to a D/A converter 17. The D/A converter 17 converts the digital video signal into an analog video signal, for outputting through an output terminal.

In the above embodiment, the first, second and third vertical transfer registers 21, 31 and 41 are driven by four different phase pulses, respectively, and the first and second horizontal transfer registers 38 and 48 are driven by the two different phase pulses. However, the phases of pulses are not limited to them.

Further the vertical transfer pulse trains $\Phi I1$ through $\Phi I4$ from the first vertical transfer register 21 do not include pulses such as the pulse P5 in the the vertical transfer pulse trains $\Phi S11$ through $\Phi S14$ and $\Phi S21$ through $\Phi S24$. However, the vertical transfer pulses $\Phi I1$ through $\Phi I4$ may contain pulses such as the pulse P5. The pulse configuration of the vertical transfer pulse trains may be practised or embodied in still other ways.

The imaging section 20 has the capacity of about 500 pixels per column × about 800 pixels per row of a photoelectric converting elements, however, the size of the imaging section 20 is not limited to this.

Furthermore, in the above embodiment, the solid-state imaging element 2 is composed of sections, as shown in Fig. 3. The sections are not limited to this. For example, in Fig. 3 the second horizontal transfer register 48 and the output section 49 may be placed above the second accumulator section 40, opposite in relation to the second accumulator section 40. In this case, the control signal from the field memory 9 is output in an opposite sequence in relation to the field memory 10. Therefore, the field memory 9 is read in a different order to match the control signals with each other. The detailed construction of the solid-state imaging element 2 may be also modified.

In the above embodiment, the charge accumulation period the control signal from the output section 49 is the period between the field shift pulse FS1 and the field shift pulse FS2 in the same vertical blanking period, as shown in Fig. 4. However, the charge accumulation period is not limited to this. For example, the charge accumulation period can be an average of two periods before and after the charge accumulation period ts. In this case, for example, the averaging operation of the periods is carried out in the field memory 9 in Fig. 2. This operation is one of motion correction operations. Therefore, if the subject is moving or a panning of a television camera is made, an error of the accumulation time between the video signal and control signal is corrected, and the dynamic range of the solid-state imaging element is expanded with higher accuracy.

Further, the saturation can be directly judged based on the output of the field memory 10.

**Claims**

1. A solid-state imaging apparatus including a plurality of pixel elements, comprising:

    imaging means (2) for converting an optical image into first and second video signals which have different optical sensitivities;

    comparison means (12) for comparing a level of the first video signal, for each pixel element , with a predetermined level;

    calculation means (11) for calculating a coefficient from the first video signal level and the predetermined level when the first video signal level of the predetermined pixel element is higher than the predetermined level; and

    control means (14) for controlling the second video signal in accordance with the coefficient.

2. The solid-state imaging apparatus according to claim 1, wherein said first video signal is set to an optical sensitivity lower than that of said second video signal, and said predetermined level is equal to a saturation output level of said imaging means (2).

3. The solid-state imaging apparatus according to claim 1, wherein the imaging means (2) comprising:

    an image section (20) including

    at least one photoelectric converting element (22) for accumulating a charge according to an optical image of a subject, and

    a first vertical transfer register (21) for receiving the charge from the at least one photoelectric converting element (22);

    a second vertical transfer register (31) for receiving charge from the first vertical transfer register (21);

    a third vertical transfer register (41) for receiving charge from the first vertical transfer register (21), the second and third vertical transfer registers (31, 41) being disposed on opposite sides of the image section (20) along a vertical direction, and being coupled to be separately driver;

    first and second horizontal transfer registers (38, 48) for transferring received from the second and third vertical transfer registers (31, 41), respectively; and

    driving means for driving the first, second and third vertical transfer register (21, 31, 41) and the first and second horizontal transfer registers (38, 48).

4. An imaging apparatus as claimed in claim 1, wherein the imaging means (2) comprises a charge coupled imaging device, and first and second accumulator sections, the first accumulator section being connected to the imaging device to receive signals corresponding to illumination levels received during a first charge accumulation period, for use as the first video signal, and the second accumulator section being connected to imaging device to receive signals corresponding to the illumination levels received during a second charge accumulation period, having a duration different from the first charge accumulation period, for use as the second video signal.

5. An imaging apparatus as claimed in any preceding claim, wherein the predetermined level is lower than a saturation level of said imaging means, by a factor equal to the ratios of the sensitivities of the first and second video signals, and wherein, when the level of the first video signal is lower than the predetermined level, the second video signal is taken as an output signal, and wherein, when the level of the first video signal exceeds the predetermined level, the saturated second video signal is multiplied by the ratio of the first video signal level to the predetermined level, in order to obtain an output signal.

104

DRIVING
SECTION

102

101

103

106

108

107

105

DRIVING
SECTION

F I G. 1

P2

$\Phi I1, \Phi S11$ — $V_H$ $V_L$

$\Phi I2, \Phi S12$ — $V_H$ $V_L$

$\Phi I3, \Phi S13$ — $V_H$ $V_L$

$\Phi I4, \Phi S14$ — $V_H$ $V_L$

P4

$\Phi I1, \Phi S21$ — $V_H$ $V_L$

$\Phi I2, \Phi S22$ — $V_H$ $V_L$

$\Phi I3, \Phi S23$ — $V_H$ $V_L$

$\Phi I4, \Phi S24$ — $V_H$ $V_L$

F I G. 5A

F I G. 5B

F I G. 2

EP 0 599 570 A1

2

S 21
S 22
S 23
S 24

41

L1
44
45
46
47

L2

SECOND
ACCUMULATOR
SECTION 40

49

48

H21
H22

ELECTRODE
GATE 51

I1
I2
I3
I4

21

L1
24
25
26
27

22
23

L2

IMAGING
SECTION 20

S 11
S 12
S 13
S 14

31

L1
34
35
36
37

L2

FIRST
ACCUMULATOR
SECTION 30

39

38

H11
H12

50

# FIG. 3

F I G.  4

**FIG. 6**

**FIG. 7**

European Patent
Office

**EUROPEAN SEARCH REPORT**

Application Number

EP 93 30 9265

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-2 255 465 (SONY BROADCAST & COMMUNICATIONS LIMITED) | 1 | H04N5/243 H04N5/235 H04N3/15 |
| A | * page 7, line 30 - page 10, line 24 * | 2,5 | |
| Y | EP-A-0 487 332 (CANON KABUSHIKI KAISHA) <br> * column 1, line 47 - column 2, line 7 * <br> * column 2, line 50 - column 4, line 4 * <br> * column 4, line 33 - column 6, line 7 * | 1-4 | |
| Y | EP-A-0 244 230 (BRITISH AEROSPACE PUBLIC LIMITED COMPANY) <br> * page 1, line 26 - page 2, line 26 * <br> * page 3, line 16 - page 4, line 12 * | 1-4 | |
| A | EP-A-0 454 996 (KABUSHIKI KAISHA TOSHIBA) <br> * column 3, line 31 - column 8, line 20 * | 1-5 | |
| A | PATENT ABSTRACTS OF JAPAN <br> vol. 11, no. 095 (E-492)25 March 1987 <br> & JP-A-61 247 176 (TOSHIBA) 4 November 1986 <br> * abstract * | 1-5 | |
| A | PATENT ABSTRACTS OF JAPAN <br> vol. 16, no. 334 (E-1239)24 July 1992 <br> & JP-A-04 104 668 (MITSUBISHI ELECTRIC COMPANY) 7 April 1992 <br> * abstract * | 5 | |
| A | US-A-4 164 758 (KOWAL) <br> * column 2, line 46 - column 3, line 37 * <br> * figures 1,2 * | 5 | |

TECHNICAL FIELDS
SEARCHED     (Int.Cl.5)

H04N

The present search report has been drawn up for all claims

| Place of search | Date of completion of the search | Examiner |
|---|---|---|
| THE HAGUE | 23 February 1994 | Wentzel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)